# EUROPEAN PATENT SPECIFICATION

(11) **EP 1 478 162 B1**
(45) Date of publication and mention of the grant of the patent: **19.03.2014**
(21) Application number: 04010950.6
(22) Date of filing: 07.05.2004
(51) Int. Cl.: H04M 1/02

(54) **Cover replacement assembly for a mobile communication terminal**
Austauscheinrichtung eines Deckels für ein Mobilkommunikationsendgerät
Assemblage de remplacement d'un couvercle pour un terminal de communication mobile

(30) Priority: 12.05.2003 KR 2003299117
(43) Date of publication of application: 17.11.2004
(73) Proprietor: LG Electronics Inc., Seoul 150-721 (KR)
(72) Inventor: Lee, Sang-Hyun, Gyeonggi-Do (KR)
(74) Representative: Beyer, Andreas

(56) References cited:
- EP-A1- 1 309 155
- EP-A2- 0 915 359
- EP-A2- 1 265 127
- WO-A1-00/56039
- WO-A1-00/56040
- DE-U1- 20 111 625
- US-A1- 2002 127 975

## Description

### Background of the Invention

### Field of the Invention

The present invention relates to a mobile communication terminal, and, more particularly, to a cover replacement assembly for a mobile communication terminal.

### Description of Related Art

A mobile communication terminal (hereinafter, referred to as 'terminal') is a portable device by which voice, message and image information can be transmitted/received through a wireless medium. Recently, terminals having multimedia function besides the simple voice transmitting/receiving function are being developed.

As mobile communication service and manufacturing technology improve, terminals have become smaller in size. Furthermore, many terminals are now constructed as a folding type mobile terminal, which offers the advantages of larger dispiay screens and better ergonomics with respect to use and portability. Currently, many terminals, including the folding-type, utilize larger liquid crystal display (LCD) screens for display purposes, larger and more power circuitry for operations, and peripherals for alternative uses, such as digital photography.

In order to protect these elements, terminals must be constructed of materials having greater structural integrity. However, such materials increase the manufacturing costs of the terminals. In balancing costs, materials such as high grade polymers have been used to construct the casing for mobile terminals. Unfortunately, such casings are highly susceptible to scratches and cracking from physical impact, and environmental damage due to exposure.

Alternative solutions have been provided in the form of polymer covers that snap fit to the casings of the terminals. However, such covers serve a more cosmetic purpose and often detach from the terminal after physical impact. Furthermore, these plastic covers add weight and volume to the terminals, which manufacturers are currently striving to make smaller.

Accordingly, there is a need for a smaller and reliable cover, which can be replaced in case of damage and which does not detract from the ergonomics and cosmetics of the terminal.

International Patent Application Publication WO 00/56040 A1 discloses a mobile radio station housing with an exchangeable panel which can be exchanged for another panel. Snap securing means are used to secure the panel to the housing. Further explanation discloses that similar panels could be used with a flip-type device.

European Patent Application Publication EP 1 265 127 discloses a cover assembly for a mobile communication terminal, the assembly having a frame, cover and locking sill.

European Patent Application Publication EP 0 915 359 discloses a rubber sheet compressed between the case of a display device and the liquid crystal display element, thus preventing penetration of dust and sounding of the electroluminescence light.

### Summary of the Invention

The present invention is directed to a cover replacement assembly for a mobile communication terminal that substantially obviates one or more problems due to limitations and disadvantages of the related art above.

An object of the present invention is to provide a cover replacement assembly for a mobile communication terminal that would not deform and sufficiently tolerate impacts applied to the terminal.

Another object of the present invention is to provide a cover replacement assembly having lower manufacturing costs and that would facilitate customization of mobile terminals.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described herein, there is provided a cover assembly for a mobile communication terminal, the assembly comprising a frame coupled to the terminal, wherein the frame comprises a locking sill, and a locking aperture. The assembly also comprises a cover detachably secured to the folder frame, wherein the cover comprises a locking element to engage the locking aperture, and at least one locking member to engage the locking sill.

According to one aspect of the present invention, the at least one locking member engages the locking sill via snap fit.

According to another aspect of the present invention, the at least one locking member is formed on a lateral edge of the cover and the locking sill is formed on an inner surface of the frame. Also, the at least one locking member and the locking sill each may comprise a protruding groove so that the protruding groove of the locking member opposes the protruding groove of the locking sill, whereby the protruding grooves of the locking member and the locking sill tightly engage each other in a locking relationship.

According to another aspect of the present invention, the locking element may comprise a hook portion that is inserted into the locking aperture when the cover is detachably secured to the frame. Also, the locking aperture may comprise an external cross-sectional area to allow contact with the locking element so that the locking element disengages the aperture. Furthermore, the locking aperture and the locking element may be formed on corresponding distal ends of the frame and the cover, respectively.

It is to be understood that both the foregoing general description and the following detailed description are exemplary and explanatory and are intended to further describe the invention as claimed.

### Brief Description of the Drawings

The accompanying drawings, which are included to provide a further understanding of the invention and are incorporated in and constitute a part of this specification, illustrate embodiments of the invention and, together with the description, serve to explain the principles of the invention.

In the drawings:
Fig. 1 illustrates a perspective view of a cover replacement assembly, in accordance with an embodiment of the present invention, disposed on a folding member of a folding-type mobile communication terminal;
Fig. 2 illustrates a perspective view of a cover replacement assembly, in accordance with an embodiment of the present invention, detached from a folding member of a folding-type mobile communication terminal;
Fig. 3 illustrates a cross sectional view of the folding member along line A-A' in Fig. 1;
Fig. 4 illustrates a cross sectional view of the folding member along line B-B' in Fig. 1; and
Fig. 5 illustrates an enlarged view of the encircled locking unit in Fig. 3;

Features, elements, and aspects of the invention that are referenced by the same numerals in different figures represent the same, equivalent, or similar features, elements, or aspects in accordance with one or more embodiments.

### Detailed Description of the Preferred Embodiments

Reference will now be made in detail to one or more embodiments of the invention, examples of which are illustrated in the accompanying drawings.

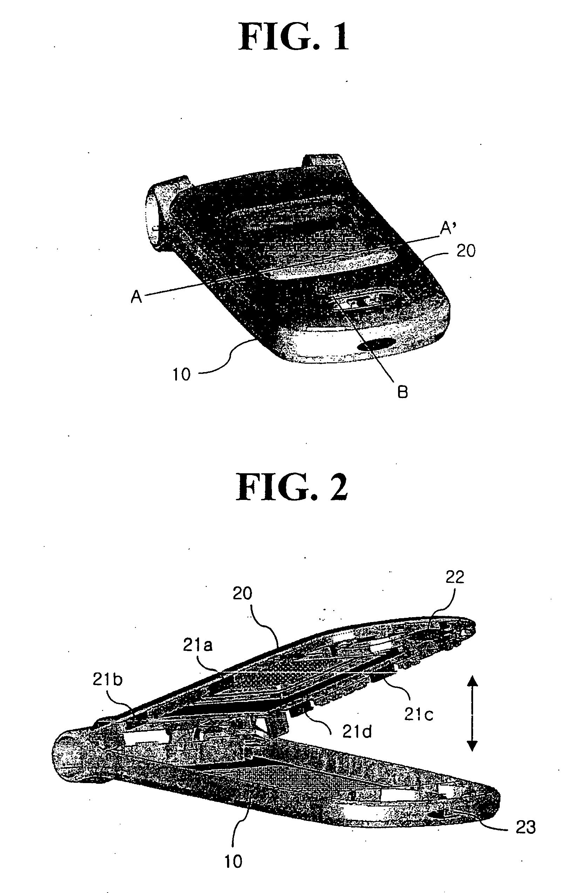

Referring to Fig. 1, a perspective view of a cover replacement assembly, disposed on a folding member of a folding-type mobile communication terminal, is illustrated in accordance with an embodiment of the present invention. In Fig. 1, a replaceable cover 20 is disposed on a folding member of a folding type mobile communication terminal, wherein the cover 20 is fastened to a terminal member frame 10 of the terminal's folding member. The terminal member frame 10 is exemplified here as comprising a hinge housing, wherein the folding member is rotatively coupled to a second folding member of the terminal. A cover replacement assembly according to an embodiment of the present invention is also applicable to the second folding member as well as candy bar type terminals. Preferably, the cover 20 fastens to the terminal frame 10 via snap fit, although other fastening means known to one of ordinary skill in the art can be applied. Also, the cover 20 comprises a predetermined locking means for smooth locking to the terminal frame 10.

In Fig. 2, the replaceable cover 20 is shown to be detached from the terminal frame 10. Locking members 21a-21d are formed at a lateral side of the cover 20. Preferably, the locking members 21a-21d are paired and formed at opposing lateral sides of the cover 20. A locking element 22 is preferably formed on a distal end of the cover 20 and engages an aperture 23 formed on a corresponding distal end of the frame 10. The locking element is preferably hook shaped so that the hook portion of the locking element 22 is inserted into the aperture 23, thereby securing the cover 20 to the frame 10. In Fig. 2, the hook portion of the locking element 22 is exemplified as "L" shaped. Also, the cross sectional area of the aperture 23 is predetermined and preferably sufficient to facilitate a user to press on the horizontal portion of the locking element 22 through the aperture 23 with his or her finger, thereby disengaging the element 22 from the aperture 23.

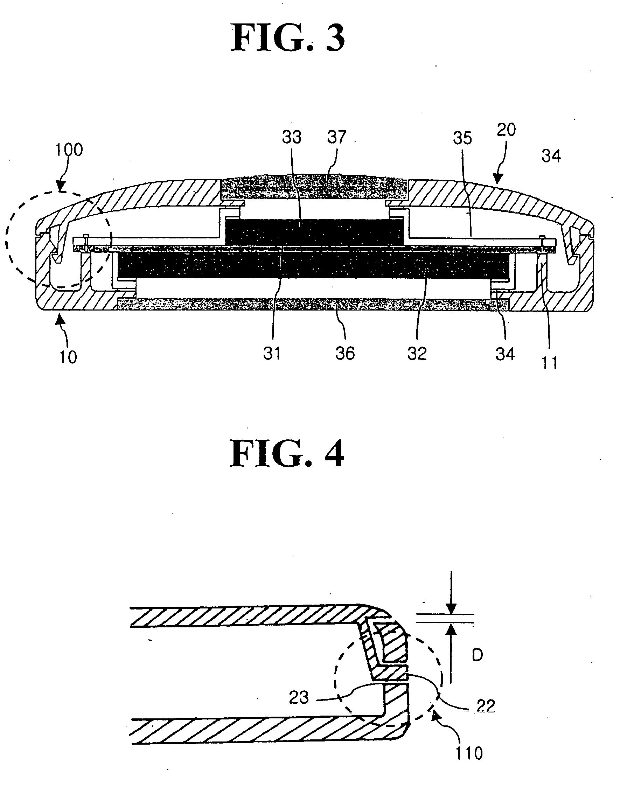

Referring to Fig. 3, a cross sectional view of the folding member along line A-A' in Fig. 1 is shown, wherein a printed circuit board (PCB) 31 for mobile communications is installed in the folding member. A support 11 may be formed on the inner sides of the frame 10 to further secure the PCB 31. A main display screen, such as liquid crystal display (LCD) 32 is also installed in the folding member and exemplified here as being placed adjacent to the PCB 31 and to a shield 34. A main display window 36 is installed on the lower perimeter of the frame 10, through which the main display 32 can be seen. A secondary window 37 is installed on the outer surface of the folding member, through which a secondary display 33 installed in the folding member can be seen. A shield 35 is disposed adjacent to the secondary display 33.

In order to prevent the PCB 31, the main display 32, and the secondary display 33 from being damaged when the cover 20 is detached from the folding member, the shields 34 and 35 are preferably made of metal and are approximately 0.5 mm in thickness.

In Fig. 4, a cross sectional view of the folding member along line B-B' in Fig. 1 shown, particularly the operational relationship of the locking element 22 and the locking aperture 23, the combination of which forms a first locking unit 100. In order to disengage the locking element 22 from the aperture 23, a user inserts his fingertip in the aperture 23 and presses on the horizontal portion of the locking element 22. By simultaneously lifting the cover 20 from the gap D formed between the cover 20 and the frame 10, the user can raise the distal edge of the cover 20 away from the frame 10, thereby fully disengaging the locking element 22 from the aperture 23.

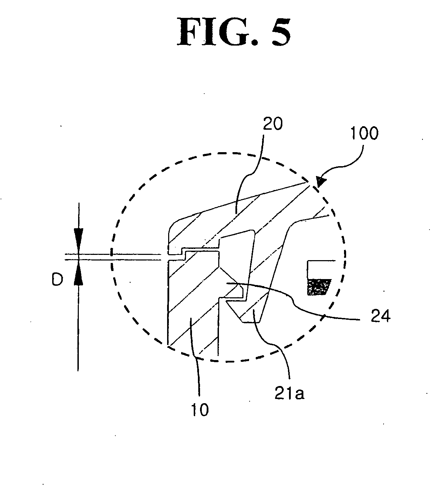

Fig. 5 illustrates an enlarged view of the encircled second locking unit 110 in Fig. 3. The second locking unit 110 comprises the locking members 21a-21d and the locking sill 24, which is formed on the inner edge of the upper perimeter of the frame 10. As exemplified in Fig. 5, locking member 21a is engaged to the locking sill 24 of the terminal member frame 10 via snap fit. After disengaging the first locking unit 100, a user is then able to insert his fingernails and/or fingertips into the gap D formed between the cover 20 and the frame 10 and disengage the locking members 21a-21d from the locking sill 24.

In order to fasten the cover 20 to the frame 10, a user aligns the cover adjacent to the frame so that locking element 22 is aligned and would engage the aperture 23. Also, the user aligns the cover 20 and/or frame 10 so that the locking members 21a-21d are aligned within the inner perimeter of the frame 10. After proper alignment, the user presses the cover 20 and frame 10 together until the locking members 21a-21d and the locking element 22 engage the locking sill 24 and locking aperture 23, respectively.

## Claims

1. A folding type mobile communication terminal comprising:
a first folding member;
a second folding member;
a frame (10) coupled to at least one of the first and second folding members and comprising a hinge housing, wherein the second folding member is rotatably coupled to the first folding member;
a printed circuit board (31), referred to hereinafter as PCB, for mobile communications mounted at the frame (10);
a display (33) disposed at a surface of the PCB (31); and
a cover (20) detachably secured to the frame, wherein the cover comprises:
a locking element (22) formed on an end of the cover; and
a plurality of locking members (21a-21d) formed on opposing lateral edges of the cover;
wherein the frame comprises:
a locking sill (24), which is formed on an inner surface of the frame, to engage the plurality of locking members; and
a locking aperture (23), which is formed on an end of the frame corresponding to the end of cover where the locking element is formed, to engage the locking element, **characterized in that**
the display (33) is disposed on a first area of the surface of the PCB (31), and
a shield (35) formed of metal is disposed adjacent to the display and the shield is configured to cover a second area of the surface of the PCB (31) and an edge portion of the display to protect the display.

2. The terminal of claim 1, wherein
each locking member of the plurality of locking members comprise a protruding groove; and
the locking sill comprises a protruding groove that opposes and tightly engages the protruding grooves of plurality of locking members in an locking relationship.

3. The terminal of claim 2,
wherein the locking element comprises a hook portion that is inserted into the locking aperture when the cover is detachably secured to the frame.

4. The terminal of claim 3,
wherein the locking aperture comprises an external cross-sectional area to allow contact with the locking element so that the locking element disengages the aperture.

5. The terminal of claim 1,
wherein the frame and cover each comprise a polymer.

## Patentansprüche

1. Klappbares Mobilkommunikationsendgerät, mit:
einem ersten Klappbauteil,
einem zweiten Klappbauteil,
einem Rahmen (10), der mit dem ersten und/oder dem zweiten Klappbauteil verbunden ist und ein Gelenkgehäuse aufweist, wobei das zweite Klappbauteil drehbar mit dem ersten Klappbauteil gekoppelt ist,
einer gedruckten Leiterplatte (31), im Folgenden als PCB bezeichnet, zur Mobilkommunikation, die an dem Rahmen (10) angebracht ist,
einem an einer Oberfläche der PCB (31) angeordneten Display (33), und
einem abnehmbar an dem Rahmen befestigten Deckel (20), wobei der Deckel aufweist:
ein an einem Ende des Deckels ausgebildetes Schließglied (22) und mehrere an entgegengesetzten Seitenrändern des Deckels ausgebildete Schließglieder (21a bis 21d),
wobei der Rahmen aufweist:
einen Arretiervorsprung (24), der an einer Innenseite des Rahmens zum Eingriff mit den mehreren Schließgliedern ausgebildet ist, und
eine Arretieröffnung (23), die an einem dem Ende des Deckels, an dem das Schließglied ausgebildet ist, entsprechenden Ende des Rahmens zum Eingriff mit dem Schließglied ausgebildet ist, **dadurch gekennzeichnet, dass**
das Display (33) in einem ersten Bereich der Oberfläche der PCB (31) angeordnet ist, und
eine aus Metall bestehende Abschirmung (35) benachbart zum Display angeordnet ist, wobei die Abschirmung dazu ausgestaltet ist, einen zweiten Bereich der Oberfläche der PCB (31) und einen Randbereich des Displays zum Schützen des Displays abzudecken.

2. Terminal nach Anspruch 1, bei dem
jedes Schließglied der mehreren Schließglieder eine vorspringende Nut aufweist, und
der Arretiervorsprung eine vorspringende Nut aufweist, die den vorspringenden Nuten der mehreren Schließglieder gegenüber liegt und mit ihnen in einer arretierenden Weise fest in Eingriff ist.

3. Terminal nach Anspruch 2, bei dem das Schließglied einen Hakenabschnitt umfasst, der in die Arretieröffnung eingeführt wird, wenn der Deckel abnehmbar an dem Rahmen befestigt wird.

4. Terminal nach Anspruch 3, bei dem die Arretieröffnung einen äußeren Querschnittsbereich für einen Kontakt mit dem Schließglied umfasst, so dass das Schließglied aus der Öffnung freikommt.

5. Terminal nach Anspruch 1, bei dem der Rahmen und der Deckel jeweils ein Polymer aufweisen.

## Revendications

1. Terminal de communication mobile de type à clapet comprenant :
un premier élément de clapet ;
un deuxième élément de clapet ;
une coque (10) couplée à au moins un parmi les premier et deuxième éléments de clapet et comprenant un logement de charnière, dans lequel le deuxième élément de clapet est couplé en rotation au premier élément de clapet ;
une carte de circuits imprimés (31), ci-après appelée PCB, pour communications mobiles montée au niveau de la coque (10) ;
un afficheur (33) disposé au niveau d'une surface de la PCB (31) ; et
un capot (20) fixé de façon détachable à la coque, dans lequel le capot comprend :
un élément (22) de blocage formé sur une extrémité du capot ; et
une pluralité d'éléments (21a-21d) de blocage formés sur des bords latéraux opposés du capot ;
dans lequel la coque comprend :
un appui (24) de blocage qui est formé sur une surface intérieure de la coque, pour engager la pluralité d'éléments de blocage ; et
une ouverture (23) de blocage qui est formée sur une extrémité de la coque correspondant à l'extrémité du capot où l'élément de blocage est formé, pour engager l'élément de blocage, **caractérisé en ce que** l'afficheur (33) est disposé sur une première zone de la surface de la PCB (31), et
une protection (35) constituée de métal est disposée adjacente à l'afficheur et la protection est configurée pour recouvrir une deuxième zone de la surface de la PCB (31) et une partie de bord de l'afficheur pour protéger l'afficheur.

2. Terminal selon la revendication 1, dans lequel
chaque élément de blocage parmi la pluralité d'éléments de blocage comprend une rainure en saillie ; et
l'appui de blocage comprend une rainure en saillie qui est opposée aux et s'engage fermement avec les rainures en saillie de la pluralité d'éléments de blocage dans une relation de blocage.

3. Terminal selon la revendication 2,
dans lequel l'élément de blocage comprend une partie de crochet qui est insérée à l'intérieur de l'ouverture de blocage lorsque le capot est fixé de façon détachable à la coque.

4. Terminal selon la revendication 3,
dans lequel l'ouverture de blocage comprend une zone extérieure en coupe transversale pour permettre un contact avec l'élément de blocage de façon à ce que l'élément de blocage se désengage de l'ouverture.

5. Terminal selon la revendication 1,
dans lequel la coque et le capot comprennent chacun un polymère.
